# EUROPÄISCHE PATENTSCHRIFT

(11) **EP 4 314 937 B1**
(45) Veröffentlichungstag und Bekanntmachung des Hinweises auf die Patenterteilung: **18.03.2026**
(21) Anmeldenummer: 22718924.8
(22) Anmeldetag: 29.03.2022
(51) Int. Cl.: G02B 27/01, G02B 5/32, G02B 27/28

(54) **HOLOGRAPHISCHE PROJEKTIONSVORRICHTUNG**
HOLOGRAPHIC PROJECTION DEVICE
DISPOSITIF DE PROJECTION HOLOGRAPHIQUE

(30) Priorität: 01.04.2021 DE 102021108354
(43) Veröffentlichungstag der Anmeldung: 07.02.2024
(73) Patentinhaber: Carl Zeiss Jena GmbH, 07745 Jena (DE)
(72) Erfinder: ZHONG, Yi, 07745 Jena (DE); KÜHL, Siemen, 07745 Jena (DE); JUNGHANS, Marc, 07745 Jena (DE); KLEINDIENST, Roman, 07745 Jena (DE); ERLER, Christoph, 07745 Jena (DE)
(74) Vertreter: Patentanwälte Geyer, Fehners & Partner mbB
(86) Internationale Anmeldenummer: PCT/EP2022/058199
(87) Internationale Veröffentlichungsnummer: WO 2022/207597

(56) Entgegenhaltungen:
- WO-A1-2020/205101
- DE-A1- 102017 213 114
- JP-A- 2013 127 489
- US-A1- 2018 067 321

## Beschreibung

Die vorliegende Erfindung betrifft eine holographische Projektionsvorrichtung zum Erzeugen eines Bildes mit den Merkmalen des Oberbegriffs des Anspruches 1.

Solche holographischen Projektionsvorrichtungen werden beispielsweise vermehrt im Fahrzeugbereich eingesetzt, um für den Fahrer ein Head-Up-Display bereitstellen zu können, bei dem die Führung und/oder Umlenkung des Bildes über die Windschutzscheibe erfolgt. Zur Umlenkung kann dabei ein Volumenhologramm verwendet werden, das an der Windschutzscheibe oder in diese eingebettet sein kann.

Bei einer solchen holographischen Projektionsvorrichtung kann z.B. Sonnenlicht (bzw. ein bestimmter Wellenlängenbereich davon), das auf die Windschutzscheibe unter einem bestimmten Winkel fällt, in unerwünschter Weise vom Volumenhologramm so umgelenkt werden, dass es als Störlicht vom Betrachter wahrgenommen wird.

Aus der JP 2013 127489 A und der US 2018/067321 A1 ist jeweils eine holographische Projektionsvorrichtung zum Erzeugen eines Bildes mit den Merkmalen des Oberbegriffs des Anspruches 1 bekannt. Die DE 10 2017 213 114 A1 beschreibt ein ein holografisch optisches Element aufweisendes Sichtfeldanzeigegerät für ein Fahrzeug und die WO 2020/205101 A1 beschreibt elektronische Displays mit holographischen Filtern.

Ausgehend hiervon ist es daher Aufgabe der Erfindung, eine holographische Projektionsvorrichtung bereitzustellen, mit der der beschriebene Nachteil möglichst vollständig überwunden werden kann.

Die Erfindung ist im unabhängigen Anspruch 1 definiert. Vorteilhafte Weiterbildungen sind in den abhängigen Ansprüchen angegeben.

Durch das Vorsehen des holographischen Filters kann das Licht, das nicht von der Nutzlichtquelle stammt und unter dem vorbestimmten Raumwinkel auf das erste Volumenhologramm trifft und von diesem so umgelenkt werden würde, dass es unerwünschtes Störlicht ist, durch Umlenkung mittels des holgraphischen Filters so abgelenkt werden, dass es z.B. vom Betrachter nicht mehr wahrnehmbar ist. Somit wird das unerwünschte Störlicht vermieden. Ferner kann auch Licht, das von der Nutzlichtquelle stammt und unter dem vorbestimmten Raumwinkel auf das erste Volumenhologramm treffen würde, vor dem Auftreffen auf das erste Volumenhologramm so mittels des holographischen Filters umgelenkt werden, dass es nicht als unerwünschtes Störlicht wahrnehmbar ist.

Die holographische Projektionsvorrichtung kann so ausgebildet sein, dass sie ein ihr zugeführtes Bild mittels des ersten Volumenhologramms umlenkt, so dass ein Betrachter es wahrnehmen kann, wenn er sein Auge in einem vorbestimmten Betrachtungsbereich positioniert und er unter einem vorbestimmten Betrachtungswinkel auf die Projektionsfläche blickt. In diesem Fall kann das erste Volumenhologramm somit z.B. als optische Komponente (wie z.B. Linse, Spiegel und/oder Gitter) wirken.

Ferner kann die erfindungsgemäße holographische Projektionsvorrichtung ein Rekonstruktionssetup aufweisen. Hierunter wird insbesondere verstanden, dass das erste Volumenhologramm so ausgebildet ist, dass in ihm (mindestens) ein Bild belichtet ist. Wird dieses Hologramm nun mittels Licht in vorbestimmter Art und Weise beleuchtet, findet in bekannter Art und Weise eine Rekonstruktion des aufgenommenen Bildes statt, so dass es ein Betrachter wahrnehmen kann. Somit kann in dem ersten Volumenhologramm das zu erzeugende Bild (insbesondere als dreidimensionales Bild) belichtet sein, welches durch Licht einer Nutzlichtquelle (beispielsweise ein Laser oder ein LED) rekonstruiert wird. Somit kann das erste Volumenhologramm so ausgestaltet sein, dass in ihm ein (z.B. dreidimensionales) Bild oder eine dynamische Bildfolge (abhängig vom Betrachtungswinkel) einbelichtet ist. Das erste Volumenhologramm kann in oder an einem transparenten Träger ausgebildet sein. Das Licht der Nutzlichtquelle kann in diesem Fall auch über eine vom ersten Volumenhologramm beabstandete Einkoppelstelle in den Träger eingekoppelt und im Träger (direkt oder beispielsweise durch interne Totalreflexionen oder sonstige Reflexionen) zum ersten Volumenhologramm geführt werden, so dass dann die gewünschte Rekonstruktion des aufgenommen Bildes erzeugt wird.

Das erste Volumenhologramm der Projektionsvorrichtung kann ferner als Streuscheibe ausgebildet sein.

Ferner kann die holographische Projektionsvorrichtung das Bild als reelles Bild (z.B. außerhalb der Ebene des ersten Volumenhologramms oder in dieser Ebene) oder als virtuelles Bild (z.B. außerhalb der Ebene des ersten Volumenhologramms) erzeugen.

Das zu vermeidende Störlicht kann beispielsweise Störlicht sein, das ein Betrachter des erzeugten Bildes wahrnehmen kann, obwohl dies vermieden werden soll. Alternativ oder zusätzlich ist es auch möglich, dass ein oder mehrere Raumwinkelbereiche bezogen auf die holographische Projektionsvorrichtung und insbesondere bezogen auf das erste Volumenhologramm und/oder den holographischen Filter festgelegt sind, in denen Störlicht vermieden werden soll. Bei der Anwendung der erfindungsgemäßen holographischen Projektionsvorrichtung im Fahrzeugbereich kann dies beispielsweise ein Bereich sein, der Fußgänger oder andere Verkehrsteilnehmer stören würde.

Das erste Volumenhologramm der holographischen Projektionsvorrichtung ist insbesondere so ausgelegt, dass die bestimmungsgemäße Umlenkung für eine oder mehrere vorbestimmte Wellenlängenbereiche (bevorzugt mit einer Bandbreite von +/- 50 nm, +/- 40 nm, +/-30 nm, +/- 20 nm, +/- 10 nm, +/- 5 nm) ausgelegt ist. Das Licht, das nicht von der Nutzlichtquelle stammt und unter dem vorbestimmten Raumwinkelbereich auf das erste Volumenhologramm trifft oder treffen würde, wodurch unerwünschtes Störlicht entstehen kann, weist bevorzugt einen Wellenlängenbereich auf, der nicht mit den Wellenlängenbereichen übereinstimmt, für die das erste Volumenhologramm ausgelegt ist.

So kann das erste Volumenhologramm beispielsweise für eine Wellenlänge von 500 nm +/- 10 nm für einen Einfallswinkel von 30° ausgelegt sein, um die gewünschte Umlenkung zur Erzeugung des Bildes zu bewirken. In diesem Fall kann z.B. eine hohe Effektivität des ersten Volumenhologramms für beispielsweise 640 nm für Einfallswinkel von -5° und -67° vorliegen, die unerwünscht ist.

Daher kann in diesem Fall der holographische Filter so entworfen bzw. ausgelegt, dass er das Störlicht von 640 nm +/- 10 nm und den Einfallswinkel von -5° und -67° so umlenkt, dass das Störlicht vermieden wird.

Der holographische Filter kann selbst als zweites Volumenhologramm ausgebildet sein und insbesondere als transmissives Volumenhologramm. Natürlich ist es auch möglich, dass er als reflektives Volumenhologramm ausgebildet ist.

Das erste Volumenhologramm und der holographische Filter sind an oder in einem transparenten Körper vorgesehen. Der transparente Körper kann beispielsweise eine Scheibe eines Fahrzeugs (insbesondere die Windschutzscheibe) oder ein sonstiger transparenter Körper sein. Er kann als planparallele Platte ausgebildet sein. Es ist auch möglich, dass der transparente Körper mindestens eine gekrümmte Grenzfläche aufweist. So kann der transparente Körper beispielsweise als Brillenglas ausgebildet sein.

Bei dem Fahrzeug kann es sich um ein Landfahrzeug, ein Wasserfahrzeug oder um ein Luftfahrzeug handeln. Ferner kann das Fahrzeug ein motorisiertes Fahrzeug oder ein muskelkraftbetriebenes Fahrzeug sein. Insbesondere kann das Fahrzeug ein Personenkraftwagen oder ein Lastkraftwagen sein.

Die Fahrzeugscheibe kann eine dem Fahrzeuginneren zugewandte Innenseite aufweisen, wobei das erste Volumenhologramm und der holographische Filter an der Innenseite ausgebildet sind.

Ferner kann die Fahrzeugscheibe eine der Innenseite abgewandte Außenseite aufweisen, wobei der holographische Filter für nicht von der Nutzlichtquelle stammendes Licht ausgelegt ist, das über die Außenseite in die Fahrzeugscheibe eintritt. Damit können Störungen von Umgebungslicht, das bei Fahrzeugen in der Regel von außen nach innen in das Fahrzeug gelangt, gut vermieden oder reduziert werden.

Das erste Volumenhologramm und der holographische Filter können übereinander angeordnet sein. Insbesondere können sie als Schichtstapel ausgebildet sein. Ferner ist es möglich, dass sie deckungsgleich sind. Ferner kann das erste Volumenhologramm und der holographische Filter direkt aufeinander oder mit einer dazwischen platzierten Verbindungsschicht angeordnet sein.

Die Umlenkung des holographischen Filters kann so erfolgen, dass das umgelenkte Licht im transparenten Körper durch mindestens eine Reflexion geführt wird. Bei der mindestens einen Reflexion kann es sich um eine innere Totalreflexion handeln. Ferner kann der transparente Körper eine Strahlfalle für das Licht aufweisen, zu der es durch die Führung im transparenten Körper gelangt. Die Umlenkung des holographischen Filters kann auch so erfolgen, dass das umgelenkte Licht ohne eine Reflexion im transparenten Körper direkt zur Strahlfalle propagiert.

Ferner kann der transparente Körper eine Einkoppelstelle aufweisen, die vom ersten Volumenhologramm beabstandet ist. So kann z.B. das zu projizierende Bild kann über die Einkoppelstelle in den transparenten Körper eingekoppelt und in diesem (beispielsweise ohne Reflexion oder durch mindestens eine Reflexion, wie z.B. eine innere Totalreflexion) bis zum ersten Volumenhologramm geführt werden.

Die erfindungsgemäße Projektionsvorrichtung kann so ausgebildet sein, dass der holographische Filter das Licht, das nicht von der Nutzungslichtquelle stammt und unter dem vorbestimmten Raumwinkel auf das erste Volumenhologramm trifft oder treffen würde, polarisationsabhängig umlenkt. Bevorzugt kann der Polarisationsanteil umgelenkt werden, der der größere ist. Der größere Polarisationsanteil des Lichtes, das nicht von der Nutzlichtquelle stammt und unter dem vorbestimmten Raumwinkel auf das erste Volumenhologramm trifft oder treffen würde, kann beispielsweise durch die Einkopplung des Lichtes in den transparenten Körper bestimmt sein bzw. sich dadurch ergeben. Bei Sonnenlicht, das in einen transparenten Körper eintritt, kann es sich dabei insbesondere um den s-Polarisationsanteil handeln, so dass dieser s-Polarisationsanteil vom holographischen Filter umgelenkt wird. Damit wird eine effektive Filterung erreicht.

Die Umlenkung mittels des ersten Volumenhologramms kann in einer ersten Ebene und die Umlenkung mittels des holographischen Filters kann in einer zweiten Ebene, die weder zur ersten Ebene parallel ist noch mit dieser zusammenfällt, erfolgen. Insbesondere können die erste und zweite Ebene aufeinander senkrecht stehen. Es ist jedoch auch möglich, dass die beiden Ebenen zueinander parallel sind.

Der holographische Filter kann vor oder hinter dem ersten Volumenhologramm (z.B. in Blickrichtung von der Austrittpupille auf die holographische Projektionsvorrichtung oder auf das Volumenhologramm gesehen) angeordnet sein.

Die holographische Projektionsvorrichtung kann ferner die Nutzlichtquelle aufweisen. Die Nutzlichtquelle kann als Bildmodul ausgebildet sein, das das zu projizierende Bild erzeugt. Das Bildmodul kann einen Bildgeber zum Erzeugen des zu projizierenden Bildes und optional eine dem Bildgeber nachgeordnete Abbildungsoptik (beispielsweise Linsen, Spiegel, etc.) aufweisen. Insbesondere kann die Abbildungsoptik zwischen Bildgeber und transparentem Körper vorgesehen sein. Das erste Volumenhologramm, das das zu projizierende Bild zur Projektion umlenkt, kann insbesondere als transmissives Volumenhologramm ausgebildet sein. Es ist jedoch auch möglich, dass es als reflektiv Volumenhologramm ausgebildet ist.

Ferner kann das zu erzeugende Bild in das erste Volumenhologramm einbelichtet sein und kann die Nutzlichtquelle so ausbildet ist, dass ihr Licht die Rekonstruktion des zu erzeugenden Bildes bewirkt.

Ferner kann das erste Volumenhologramm mehrere Teilgitter aufweisen, die jeweils für eine vorbestimmte Wellenlänge mit einer gewissen Bandbreite (von beispielsweise ± 10 nm) ausgelegt sind. Dabei kann es sich beispielsweise um Wellenlängen für rotes, grünes und blaues Licht handeln. Dadurch kann ein mehrfarbiges Bild umgelenkt werden. Bevorzugt ist die Bilderzeugung daran angepasst und es werden entsprechende Farbteilbilder erzeugt. Diese können gleichzeitig oder so schnell nacheinander erzeugt werden, dass ein Benutzer sie nur in Überlagerung als mehrfarbiges Bild wahrnehmen kann.

Die holographische Projektionsvorrichtung kann auch als auf den Kopf aufsetzbare Vorrichtung ausgebildet sein. Dazu kann eine Haltevorrichtung vorgesehen sein, die z.B. brillenartig oder helmartig ausgebildet ist.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine schematische Ansicht einer ersten Ausführungsform der erfindungsgemäßen holographischen Projektionsvorrichtung 1 ;
- Fig. 2: eine weitere schematische Ansicht der erfindungsgemäßen holographischen Projektionsvorrichtung 1 von Fig. 1 zur Erläuterung des möglicherweise auftretenden Störlichtes;
- Fig. 3: eine weitere schematische Ansicht der erfindungsgemäßen holographischen Projektionsvorrichtung 1 von Fig. 1 zur Erläuterung der Wirkungsweise des holographischen Filters 12;
- Fig. 4: eine schematische Darstellung der Umlenkeffizienz des Gitters für Licht mit 500 nm in der Polymerschicht 11 in Abhängigkeit des Einfallswinkels;
- Fig. 5: eine schematische Darstellung zur Erläuterung von auftretendem Störlicht;
- Fig. 6: eine schematische Darstellung zur Erläuterung der Wirkungsweise des holographischen Filters 12 zur Vermeidung des Störlichts gemäß Fig. 5;
- Fig. 7: eine schematische Darstellung zur Erläuterung des möglichen Auftretens von Störlicht;
- Fig. 8: eine Darstellung zur Erläuterung der Funktionsweise des Filters 12 zur Vermeidung des Streulichts gemäß Fig. 7;
- Fig. 9: eine schematische vergrößerte Seitenansicht einer weiteren Ausführungsform der holographischen Projektionsvorrichtung 1 ;
- Fig. 10: eine schematische Darstellung zur Erläuterung der Bezugsebene für die Polarisationsrichtungen in Fig. 9;
- Fig. 11: eine Frontansicht der Ausführungsform von Fig. 9;
- Fig. 12: eine Darstellung zur Erläuterung der Bezugsebene der Polarisationsrichtungen für die erfolgte Beugung am holographischen Filter 12;
- Fig. 13: eine Draufsicht der Ausführungsform von Fig. 9;
- Fig. 14: eine schematische Ansicht einer weiteren Ausführungsform der erfindungsgemäße holographischen Projektionsvorrichtung 1 ;
- Fig. 15: eine schematische Ansicht einer weiteren Ausführungsform der erfindungsgemäßen holographischen Projektionsvorrichtung 1 ;
- Fig. 16: eine weitere Ausführungsform der erfindungsgemäßen holographischen Projektionsvorrichtung 1, und
- Fig. 17: eine Teilschnittansicht der Projektionsfläche 1 von Fig. 16.

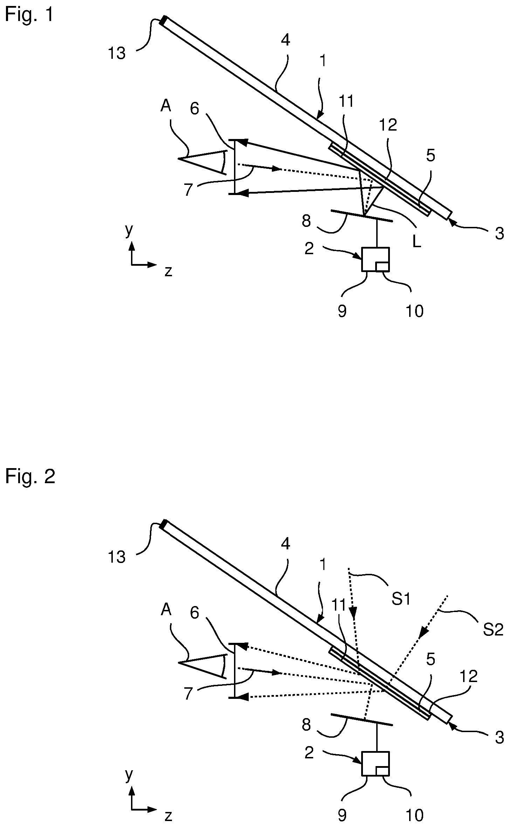

Bei der in Fig. 1 gezeigten Ausführungsform umfasst die erfindungsgemäße holographische Projektionsvorrichtung 1 als Nutzlichtquelle ein Bildmodul 2 zur Erzeugung eines Bildes (bevorzugt eines mehrfarbigen Bildes) sowie eine Projektionseinheit 3, die hier einen in eine Windschutzscheibe 4 eines Fahrzeugs integrierten holographischen Strahlteiler 5 umfasst, an dem das mehrfarbige Bild (stellvertretend ist der Strahlengang eines Lichtbündels 2 eingezeichnet) in Richtung zu einer Austrittspupille 6 der Projektionseinheit 3 so umgelenkt wird, dass ein Benutzer, der sein Auge A in der Austrittspupille 6 positioniert, das mehrfarbige Bild als virtuelles Bild wahrnehmen kann, wenn er entlang einer vorbestimmten Blickrichtung 7 auf die Projektionseinheit 3 (bzw. hier auf den holographischen Strahlteiler 5) blickt.

Das Bildmodul 2 kann einen Bildgeber 8 sowie eine Steuereinheit 9 mit einem Prozessor 10 umfassen, wobei die Steuereinheit 9 den Bildgeber 8 zur Erzeugung des mehrfarbigen Bildes ansteuert. Bei dem Bildgeber 8 kann es sich um ein LCD-Modul, ein OLED-Modul oder ein LCoS-Modul oder um eine Kippspiegelmatrix handeln. Ferner kann der Bildgeber eine Mattscheibe aufweisen, die hier nicht eingezeichnet ist.

Das mehrfarbige Bild wird mittels des Bildgebers 8 dadurch erzeugt, dass beispielsweise drei Farbteilbilder mit unterschiedlichen Wellenlängen erzeugt werden. Dabei kann es sich z.B. um ein blaues Farbteilbild mit einer Wellenlänge von 460 nm, ein grünes Farbteilbild mit einer Wellenlänge von 500 nm und ein rotes Farbteilbild mit einer Wellenlänge von 640 nm handeln. Die Farbteilbilder können gleichzeitig oder alternierend zeitlich so schnell hintereinander erzeugt werden, dass für einen Benutzer nur die Überlagerung als mehrfarbiges Bild wahrnehmbar ist.

Der holographische Strahlteiler 5 weist eine Fotopolymerschicht 11 auf, in der für jede der drei Wellenlängen ein volumenholographisches Gitter geschrieben ist. Die drei Gitter überlagern sich damit im gleichen Volumen (nämlich in der Fotopolymerschicht 11), so dass ein sogenanntes Multiplexing (bzw. erstes Volumenhologramm) vorliegt. Jedes der drei volumenholographischen Gitter ist so ausgebildet, dass es für eine der drei genannten Wellenlängen (beispielsweise mit einer Bandbreite von ± 10 nm) reflektiv ist und die restlichen Wellenlängen transmittiert. Dabei wird die Reflektivität der einzelnen volumenholographischen Gitter z.B. so eingestellt, dass eine Reflektivität von ca. 45% vorliegt. Dies ist hauptsächlich darin begründet, dass für den geschilderten Verwendungszweck in der Windschutzscheibe 4 des Fahrzeuges Reflektivitäten von 100% aus Sicherheitsgründen nicht zulässig sind, da der Fahrer auch im Bereich des holographischen Strahlteilers 5 durch die Windschutzscheibe 4 hindurchsehen können muss. Für andere Anwendungen, bei denen solche Sicherheitsaspekte keine Rolle spielen, können die volumenholographischen Gitter sehr wohl so ausgelegt sein, dass sie eine Reflektivität von größer als 45% aufweisen.

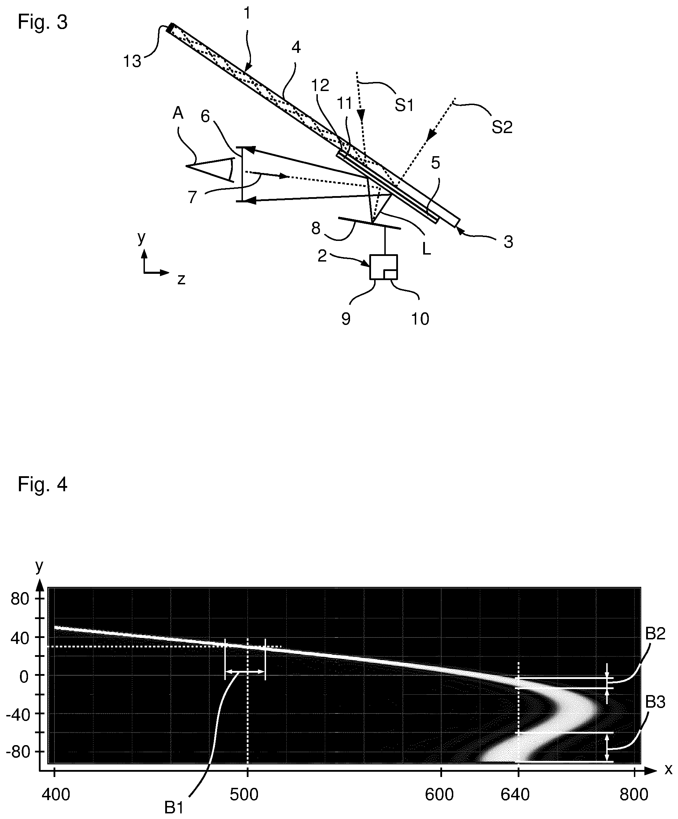

Zwischen der Fotopolymerschicht 11 und der Windschutzscheibe 4 ist ein holographischer Filter 12 angeordnet, dessen Funktion in Verbindung mit den Fig. 2 und 3 beschrieben wird.

Wäre der holographische Filter nicht vorhanden, so würde Licht z.B. mit einer Wellenlänge von 640 nm, das unter einem vorbestimmten Winkel (z.B. -5° oder -67°) von vorne auf die Windschutzscheibe 4 fällt, durch diese transmittiert wird und auf die Fotopolymerschicht 11 fällt, in unerwünschter Weise als Störlicht zur Austrittspupille 6 hin umgelenkt werden, wie in Fig. 3 dargestellt ist. Die entsprechenden Einfallswinkelbereiche sind in Fig. 2 durch die Strahlung S1 und S2 angedeutet. Um zu verhindern, dass in dieser Art und Weise Störlicht in die Austrittspupille 6 (die auch als Eyebox 6 bezeichnet werden kann) fällt, ist der holographische Filter 12 vorgesehen, der unter diesem Winkel einfallende Strahlung S1, S2 mit einer Wellenlänge von 640 nm so umlenkt (hier reflektiert), dass die Strahlung S1, S2 nicht auf die Fotopolymerschicht 11 trifft, sondern in der Windschutzscheibe 4 beispielsweise durch innere Totalreflexion bis zu einer beispielsweise am oberen Rand angeordneten Strahlfalle 13 geführt wird und dort absorbiert wird, wie in Fig. 3 gezeigt ist.

Diese beschriebene unerwünschte Eigenschaft der Gitter in der Fotopolymerschicht 11 wird in Verbindung mit Fig. 4 für das Gitter für die Wellenlänge 500 nm erläutert.

In Fig. 4 ist entlang der x-Achse die Wellenlänge in nm und entlang der y-Achse der Einfallswinkel in ° aufgetragen, wobei eine umso höhere Umlenkeffizienz vorliegt, umso heller die Darstellung ist.

Wie der Darstellung somit entnommen werden kann, liegt für die Wellenlänge von 500 nm eine Umlenkeffizienz im Bereich von 30° vor (Bereich B1).

Zusätzlich weist das Gitter jedoch für eine Wellenlänge im Bereich von 640 nm in unerwünschter und nicht zu verhindernder Art und Weise eine hohe Umlenkeffizienz für die Einfallswinkel von -5° (Bereich B2) und -67° (Bereich B3) vor.

Daher ist der holographische Filter 12 so ausgelegt, dass er für diese Wellenlänge und diese Einfallswinkel eine Umlenkung derart bewirkt, dass das Störlicht nicht mehr bis zur Austrittspupille gelangt. Bevorzugt bewirkt der Filter eine Umlenkung für diese Wellenlänge 640 nm und dieser Einfallswinkel -5° und -67° derart, dass diese Strahlung so umgelenkt wird, dass sie in der Scheibe 4 bis zur Strahlfalle 13 geführt wird. Damit kann in sicherer Art und Weise das unerwünschte Störlicht vermieden werden.

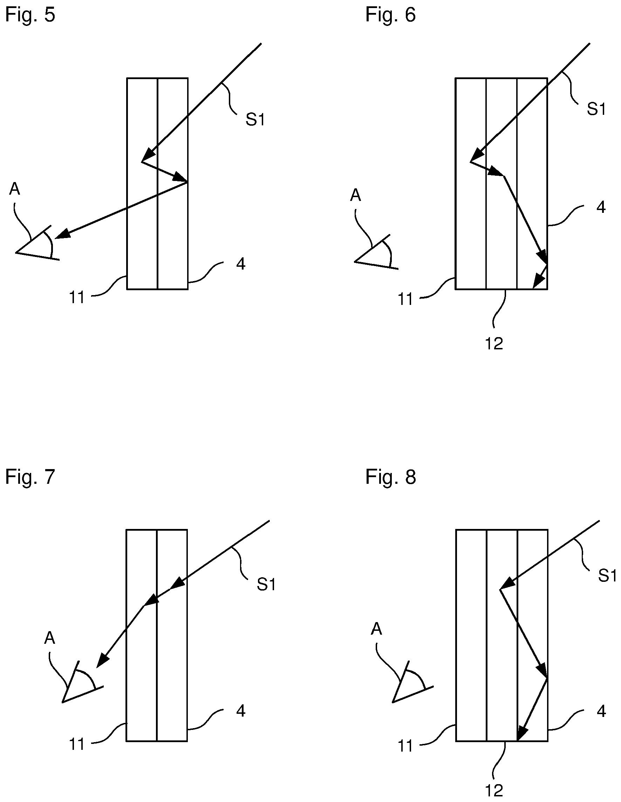

Das Auftreten des Störlichts und das Verhindern des Störlichts soll nachfolgend noch in Verbindung mit Figuren 5 bis 8 weiter beschrieben werden.

In der schematischen Schnittdarstellung in Fig. 5 ist gezeigt, dass die Strahlung S1 durch die Windschutzscheibe 4 und auf die Fotopolymerschicht 11 fallen würde, an der eine Reflexion zur Vorderseite der Windschutzscheibe 4 stattfinden würde, an der wiederum eine Reflexion zum Auge A des Betrachters hin stattfinden würde.

Um dies zu verhindern, ist, wie in Fig. 6 gezeigt, der holographische Filter 12 vorgesehen, der das von der Fotopolymerschicht 11 reflektierte Licht (Strahlung S1) so umlenkt, dass das umgelenkte Licht dann in der Windschutzscheibe 4 durch innere Totalreflexion bis zum Rand der Windschutzscheibe und dort z.B. bis zur Strahlfalle 13 (Fig. 3) geführt wird. Somit gelangt dadurch das Störlicht nicht mehr in das Auge A des Betrachters.

In Fig. 7 ist der Fall gezeigt, bei dem das Licht S1 durch die Windschutzscheibe 4 läuft und an der Fotopolymerschicht so umgelenkt wird, dass es auf das Auge A des Betrachters treffen würde.

In Fig. 8 ist gezeigt, dass aufgrund des holographischen Filters 12 das die Strahlung S1 zur Windschutzscheibe 4 umgelenkt wird, bevor sie auf die Fotopolymerschicht 11 trifft. Die Umlenkung zur Windschutzscheibe 4 erfolgt dabei so, dass eine Führung der Strahlung in der Windschutzscheibe 4 erfolgt. Diese kann bevorzugt bis zur Strahlfalle 13 (Fig. 3) vorliegen.

In dieser Art und Weise kann somit effektiv verhindert werden, dass das unerwünschte Störlicht in die Austrittspupille 6 gelangt. Bei der Strahlung S1, S2 kann es sich um Umgebungslicht (beispielsweise Sonnenlicht) oder Licht einer anderen Lichtquelle als Licht des Bildgebers 8 handeln.

Bei der in Verbindung mit Fig. 1 bis 3 beschriebenen Ausführungsform wird das unerwünschte Licht S1, S2 in gleicher Weise wie das Licht L des Bildgebers 8 in der y-z-Ebene umgelenkt. Im Fall einer Windschutzscheibe eines Autos ist dies die Ebene senkrecht zur Fahrbahn.

Der holographische Filter 12 kann jedoch auch so ausgebildet sein, dass das unerwünschte Licht S1, S2 bzw. die unerwünschte Strahlung S1, S2 in einer Ebene parallel zur Fahrbahn und somit einer Ebene, die senkrecht zur y-Achse und parallel zur z-Achse liegt, umgelenkt werden. Dadurch ist die von der Fotopolymerschicht 11 erzeugte Beugung des Lichtes L des Bildgebers 8 in einer anderen Ebene als die Beugung des holographischen Filters 12 (insbesondere stehen die beiden Ebenen hier senkrecht aufeinander), so dass die Beugungen entkoppelt sind.

Bei der in Verbindung mit Fig. 1 bis 3 beschriebenen Ausführungsform liegt der holographische Filter 12 hinter der Polymerschicht 11 bezogen auf die Blickrichtung 7. Es ist jedoch auch möglich, die Reihenfolge des holographischen Filters 12 und der Fotopolymerschicht 11 umzudrehen. In diesem Fall wird das unerwünschte Licht S1, S2, das an der Fotopolymerschicht 11 gebeugt wird, durch den holographischen Filter 13 so umgelenkt, dass es nicht bis zur Austrittspupille 6 gelangt. Das unerwünschte Licht S1, S2 wird somit in eine Richtung gebeugt, die nicht kritisch ist.

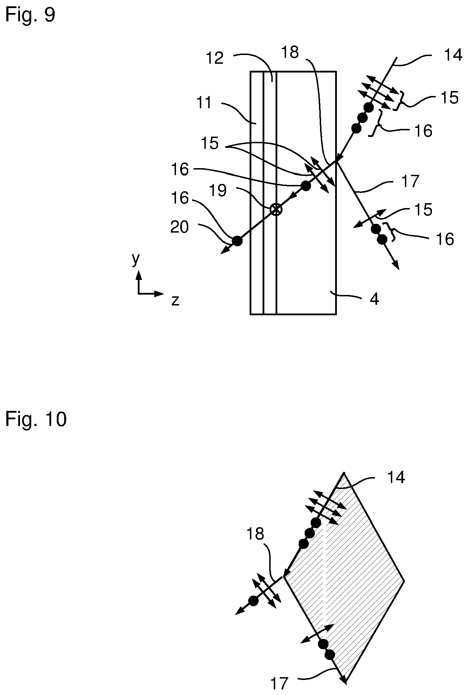

Wenn das unerwünschte Licht S1, S2 beispielsweise unpolarisiert ist (wie dies bei Sonnenlicht der Fall ist), kann die Beugungseffizienz des holographischen Filters 12 für die Polarisation optimiert werden, die einen höheren Anteil nach Eintritt in die Windschutzscheibe 4 aufweist. In der schematisch vergrößerten Seitenansicht gemäß Fig. 9 ist ein Sonnenlichtstrahl 14 gezeigt, der p-Polarisationsanteile 15 sowie s-Polarisationsanteile 16 aufweist. Beim Eintritt in die Windschutzscheibe 4 wird ein Anteil des Strahls 14 als Strahl 17 reflektiert und ein verbleibender Anteil 18 tritt in die Windschutzscheibe 4 ein. Dieser Effekt ist polarisationsabhängig und führt dazu, dass der reflektierte Strahl 17 einen größeren s-Polarisationsanteil aufweist, als der eingekoppelte Strahl 18. Dies ist durch die beiden Punkte 16 beim Strahl 17 und durch den einzelnen Punkt 16 beim Strahl 18 angedeutet. Entsprechend weist der reflektierte Strahl 17 einen geringeren p-Polarisationsanteil auf (nur ein Doppelpfeil 15) als der eingekoppelte Strahl 17 (zwei Doppelpfeile 15).

Die s-Polarisation ist dabei die Polarisation senkrecht zur Bezugsebene, die durch den einfallenden Strahl 14 und den reflektierten Strahl 17 aufgespannt ist (Fig. 10). Entsprechend ist die p-Polarisation die Polarisation parallel zu dieser Bezugsebene.

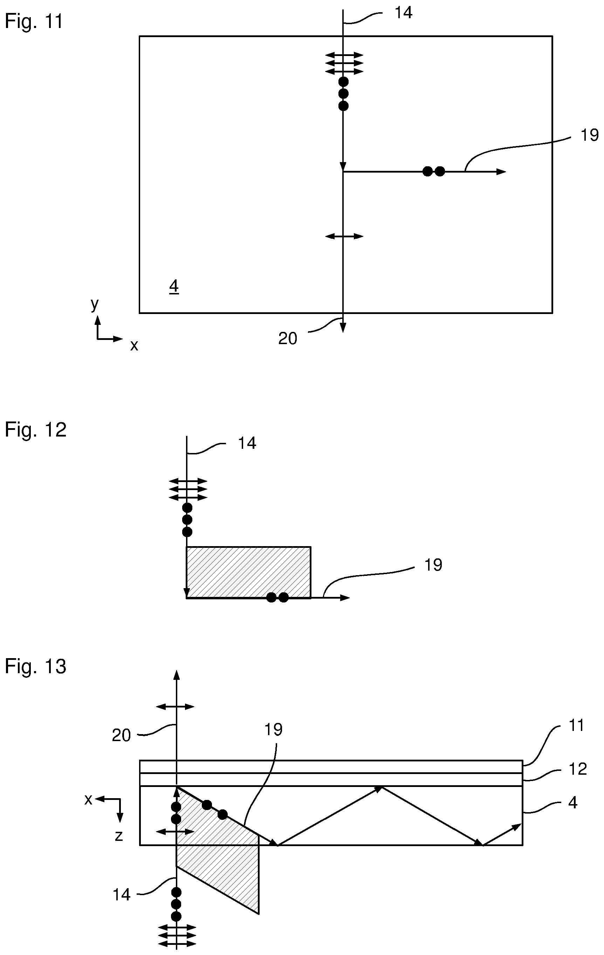

Der holographische Filter 12 ist nun so ausgebildet, dass er den p-Polarisationsanteil des eingekoppelten Strahls 18 reflektiert, wie durch den Kreis 19 mit eingeschriebenem x in Fig. 9 angedeutet ist. Dabei ist jedoch die Reflexion so, dass sie in x-Richtung und somit in die Zeichenebene hinein erfolgt. Dies ist besser in der Frontansicht gemäß Fig. 11 ersichtlich, in der der reflektierte Strahl 19 entlang der x-Richtung verläuft.

Der Anteil des Strahls 18, der s-polarisiert ist, wird von dem holographischen Filter 12 in hohem Umfang transmittiert (Strahl 20). Dieser Anteil ist jedoch deutlich geringer als der p-Polarisationsanteil, so dass das unerwünschte Störlicht 20 so gut wie vollständig unterdrückt wird. In Fig. 12 ist die Bezugsebene für die Polarisation für die Beugung am holographischen Filter 12 gezeigt. Diese ist durch den einfallenden Strahl 18 und den gebeugten Strahl 19 aufgespannt.

In Fig. 13 ist die Draufsicht gezeigt, aus der ersichtlich ist, dass der gebeugte Teil 19 in der Windschutzscheibe 4 durch innere Totalreflexion geführt ist, wie in Verbindung mit Fig. 3 bereits beschrieben wurde.

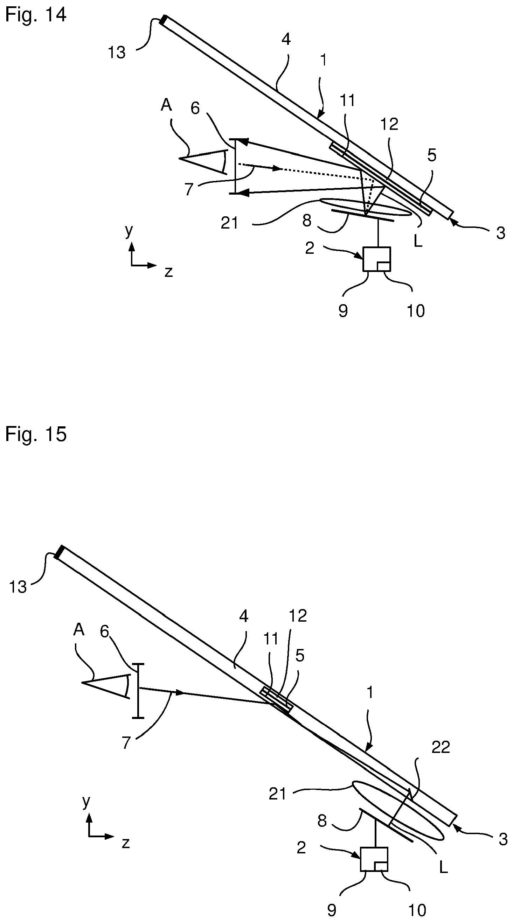

Natürlich ist es möglich, dass die erfindungsgemäße Projektionsvorrichtung 1 noch weitere optische Elemente beispielsweise zur Aberrationsminimierung aufweist. So können Spiegel und Linsen verwendet werden. Wie in Fig. 14 schematisch dargestellt ist, kann beispielsweise zwischen dem Bildgeber 8 und dem holographischen Strahlteiler 5 eine Optik 21 angeordnet sein, die hier schematisch als Linse eingezeichnet ist.

Ferner ist in Fig. 15 eine Abwandlung gezeigt, bei der das Licht des Bildgebers 8 über ein Einkoppelelement 22 (beispielsweise Umlenkspiegel) in die Windschutzscheibe 4 eingekoppelt wird und in dieser durch mindestens eine Reflexion bis zur Fotopolymerschicht 11 geführt wird, an der die beschriebene Auskopplung durchgeführt wird.

Statt der Windschutzscheibe 4 kann auch jeder andere transparente Körper für die erfindungsgemäße Projektionsvorrichtung 1 verwendet werden. Dieser transparente Körper kann als planparallele Platte ausgebildet sein. Es ist jedoch auch möglich, dass mindestens eine Grenzfläche (beispielsweise Vorder- und/oder Rückseite) gekrümmt ausgebildet ist.

Die Fotopolymerschicht 11 und/oder holographische Filter 12 kann in dem transparenten Körper, wie mit der Windschutzscheibe 4 in Fig. 15 gezeigt, eingebettet sein. Es ist jedoch auch möglich, dass die Fotopolymerschicht 11 und/oder der holographische Filter 12 auf der Vorderseite oder Rückseite des transparenten Körpers ausgebildet ist, wie z.B. in Fig. 1-3, 13 und 14 gezeigt ist. Ferner kann noch eine Deckschicht auf der Fotopolymerschicht 11 und/oder dem holographischen Filter 12 vorgesehen sein.

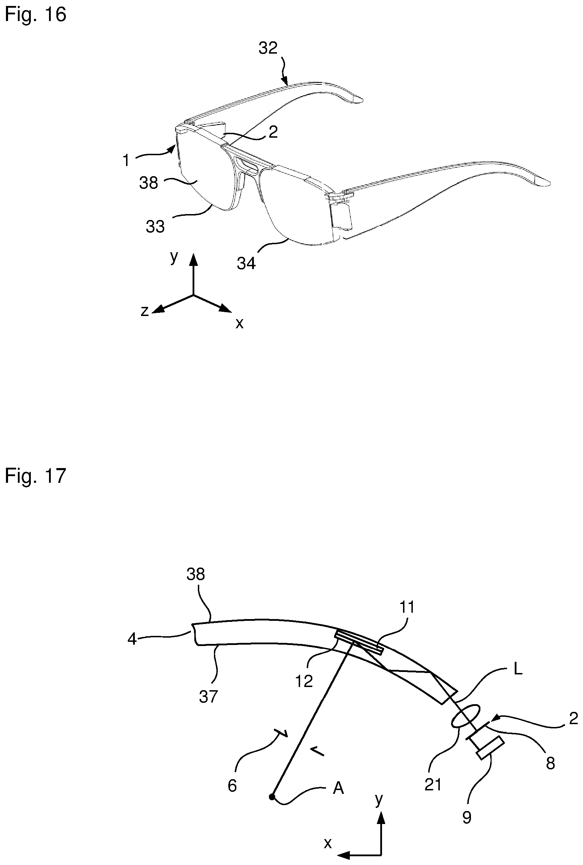

Die erfindungsgemäße Projektionsvorrichtung 1 kann auch als auf den Kopf des Benutzers aufsetzbar ausgebildet sein und dazu eine auf den Kopf des Benutzers aufsetzbare Haltevorrichtung 32 aufweisen, die z.B. in Art eines herkömmlichen Brillengestells ausgebildet sein kann (Fig. 16). In diesem Fall kann die Projektionsvorrichtung 1 ein erstes und ein zweites Brillenglas 33, 34, die an der Haltevorrichtung 32 befestigt sind, aufweisen. Die Haltevorrichtung 32 mit den Brillengläsern 33, 34 kann z.B. als Sportbrille, Sonnenbrille und/oder Brille zur Korrektur einer Fehlsichtigkeit ausgebildet sein, wobei dem Benutzer über das erste Brillenglas 33 das virtuelle Bild in sein Gesichtsfeld eingespiegelt werden kann.

Das Bildmodul 2 kann im Bereich des rechten Brillenbügels der Haltevorrichtung 32 angeordnet sein, wie in Fig. 16 schematisch dargestellt ist.

Wie am besten aus der vergrößerten, schematischen Teilschnittansicht in Fig. 17 ersichtlich ist, weist das erste Brillenglas 33 eine Rückseite 37 und eine Vorderseite 38 auf. Die Rückseite 37 und die Vorderseite 38 sind hier gekrümmt. Es ist jedoch auch möglich, dass sie plan sind. Bei der Krümmung kann es sich um eine sphärische Krümmung oder eine asphärische Krümmung handeln.

Falls das virtuelle Bild in Überlagerung mit der Umgebung sichtbar sein soll, kann wiederum eine effektive Umlenkeffizienz im Bereich von beispielsweise 50% vorliegen. Falls die Umgebung nicht sichtbar sein soll, kann die Umlenkeffizienz größer gewählt werden.

## Patentansprüche

1. Holographische Projektionsvorrichtung zum Erzeugen eines Bildes, das ein Betrachter wahrnehmen kann, wenn sein Auge (A) in einem vorbestimmten Betrachtungsbereich positioniert ist und er unter einem vorbestimmten Betrachtungswinkel auf die Projektionsvorrichtung (1) blickt,
wobei die Projektionsvorrichtung (1) ein erstes Volumenhologramm aufweist, das bei Beaufschlagung mit Licht einer Nutzlichtquelle dieses zur Erzeugung des Bildes umlenkt,
wobei das erste Volumenhologramm ferner die Eigenschaft aufweist, dass Licht, das nicht von der Nutzlichtquelle stammt und unter einem vorbestimmten Raumwinkel auf das erste Volumenhologramm trifft, so umlenken würde, dass es als unerwünschtes Störlicht wahrnehmbar ist,
**dadurch gekennzeichnet, dass**
die Projektionsvorrichtung (1) einen holographischen Filter (12) aufweist, der an oder in einem transparenten Körper (4) angeordnet ist,
wobei das erste Volumenhologramm am oder im transparenten Körper (4) angeordnet ist, und
wobei der holographische Filter (12)
- das Licht, das nicht von der Nutzlichtquelle stammt und unter dem vorbestimmten Raumwinkel auf das erste Volumenhologramm treffen würde, vor dem Auftreffen auf das erste Volumenhologramm so umlenkt, dass es nicht als unerwünschtes Störlicht wahrnehmbar ist,
und/oder
- das Licht, das nicht von der Nutzlichtquelle stammt und unter dem vorbestimmten Raumwinkel auf das erste Volumenhologramm trifft, nach der Umlenkung durch das erste Volumenhologramm so umlenkt, dass es nicht als unerwünschtes Störlicht wahrnehmbar ist.

2. Holographische Projektionsvorrichtung nach Anspruch 1,
wobei der holographische Filter (12) das Licht, das nicht von der Nutzlichtquelle stammt und unter dem vorbestimmten Raumwinkel auf das erste Volumenhologramm trifft oder treffen würde, so umlenkt, dass es im transparenten Körper (4) als umgelenktes Licht durch mindestens eine Reflexion geführt ist.

3. Holographische Projektionsvorrichtung nach Anspruch 2,
wobei das umgelenkte Licht im transparenten Körper (4) durch die mindestens eine Reflexion bis zu einer Strahlfalle (13) geführt ist.

4. Holographische Projektionsvorrichtung nach einem der obigen Ansprüche,
wobei der Körper (4) eine Einkoppelstelle (22) aufweist, über die das Licht der Nutzlichtquelle zuführbar ist und nach der eine Führung im Körper (4) bis zum ersten Volumenhologramm, das von der Einkoppelstelle beabstandet ist, stattfindet.

5. Holographische Projektionsvorrichtung nach einem der obigen Ansprüche,
bei der der transparente Körper (4) als Scheibe eines Fahrzeugs und insbesondere als Windschutzscheibe eines Fahrzeugs ausgebildet ist,

6. Holographische Projektionsvorrichtung nach Anspruch 5,
bei der die Scheibe bzw. die Windschutzscheibe eine dem Fahrzeuginneren zugewandte Innenseite aufweist,
wobei das erste Volumenhologramm und der holographische Filter (12) an der Innenseite ausgebildet sind,
wobei bevorzugt die Scheibe bzw. die Windschutzscheibe eine der Innenseite abgewandte Außenseite aufweist und der holographische Filter (12) für nicht von der Nutzlichtquelle stammendes Licht ausgelegt ist, das über die Außenseite in die Scheibe bzw. die Windschutzscheibe eintritt.

7. Holographische Projektionsvorrichtung nach einem der obigen Ansprüche,
bei der das erste Volumenhologramm und der holographische Filter (12) übereinander angeordnet sind.

8. Holographische Projektionsvorrichtung nach einem der obigen Ansprüche,
wobei das erste Volumenhologramm für mindestens einen ersten Wellenlängenbereich die Umlenkung zur Erzeugung des Bildes bewirkt und das nicht von der Nutzlichtquelle stammende und unter dem vorbestimmten Raumwinkel auf das erste Volumenhologramm treffende oder treffen würdende Licht aus einem zweiten Wellenlängenbereich stammt, der sich vom mindestens einen ersten Wellenlängenbereich unterscheidet.

9. Holographische Projektionsvorrichtung nach einem der obigen Ansprüche,
wobei der holographische Filter (12) ein zweites Volumenhologramm umfasst und/oder
wobei der holographische Filter (12) das Licht, das nicht von der Nutzlichtquelle stammt und unter dem vorbestimmten Raumwinkel auf das erste Volumenhologramm treffen würde, reflektiert.

10. Holographische Projektionsvorrichtung nach einem der obigen Ansprüche,
wobei der holographische Filter (12) von dem Licht, das nicht von der Nutzlichtquelle stammt und unter dem vorbestimmten Raumwinkel auf das erste Volumenhologramm trifft oder treffen würde, den Polarisationsanteil umlenkt, der der größere ist.

11. Holographische Projektionsvorrichtung nach Anspruch 1 und 10,
bei der der größere Polarisationsanteil durch die Einkopplung des Lichtes, das nicht von der Nutzlichtquelle stammt und unter dem vorbestimmten Raumwinkel auf das erste Volumenhologramm trifft oder treffen würde, in den transparenten Körper (4) bestimmt ist.

12. Holographische Projektionsvorrichtung nach einem der obigen Ansprüche,
wobei die Umlenkung mittels des ersten Volumenhologramms in einer ersten Ebene und die Umlenkung mittels des holographischen Filters (12) in einer zweiten Ebene, die weder zur ersten Ebene parallel ist noch mit dieser zusammenfällt, erfolgt,
wobei bevorzugt die zweite Ebene senkrecht zur ersten Ebene ist.

13. Holographische Projektionsvorrichtung nach einem der obigen Ansprüche, mit einer Nutzlichtquelle (2).

14. Holographische Projektionsvorrichtung nach Anspruch 13,
wobei die Nutzlichtquelle als Bildmodul (2) ausgebildet ist, das ein Bild erzeugt, das mittels des Volumenhologramms zur Erzeugung des Bildes umgelenkt wird,
wobei bevorzugt das Bildmodul (2) einen Bildgeber (8) zum Erzeugen des zu projizierenden Bildes und eine dem Bildgeber (8) nachgeordnete Abbildungsoptik (21) aufweist.

15. Holographische Projektionsvorrichtung nach einem der Ansprüche 1 bis 13,
wobei das zu erzeugende Bild in das erste Volumenhologramm einbelichtet ist und die Nutzlichtquelle so ausbildet ist, dass ihr Licht die Rekonstruktion des zu erzeugenden Bildes bewirkt.

## Claims

1. A holographic projection device for generating an image that a viewer can perceive when their eye (A) is positioned in a predetermined viewing region and they look at the projection device (1) at a predetermined viewing angle,
wherein the projection device (1) comprises a first volume hologram which, when exposed to light from a used light source, deflects this light for generating the image,
wherein the first volume hologram further has the property that it would deflect light that does not originate from the used light source and is incident on the first volume hologram at a predetermined solid angle such that it is perceptible as unwanted interfering light,
**characterized in that**
the projection device (1) comprises a holographic filter (12), which is arranged on or in a transparent body (4)
wherein the first volume hologram is arranged on or in a transparent body (4), and
wherein the holographic filter (12)
- deflects the light that does not originate from the used light source and would be incident on the first volume hologram at the predetermined solid angle before being incident on the first volume hologram, in such a way that it is not perceptible as unwanted interfering light,
and/or
- deflects the light that does not originate from the used light source and is incident on the first volume hologram at the predetermined solid angle after the deflection by means of the first volume hologram, in such a way that it is not perceptible as unwanted interfering light.

2. The holographic projection device as claimed in claim 1,
wherein the holographic filter (12) deflects the light that does not originate from the used light source and is or would be incident on the first volume hologram at the predetermined solid angle such that it is guided in the transparent body (4) as deflected light by way of at least one reflection.

3. The holographic projection device as claimed in claim 2,
wherein the deflected light in the transparent body (4) is guided by way of the at least one reflection to a beam trap (13).

4. The holographic projection device as claimed in any of the preceding claims,
wherein the body (4) comprises a coupling point (22) via which the light from the used light source is suppliable and after which a guidance in the body (4) to the first volume hologram, which is spaced apart from the coupling point, takes place.

5. The holographic projection device as claimed in any of the preceding claims,
wherein the transparent body (4) is formed as a window of a vehicle and in particular as a windshield of a vehicle.

6. The holographic projection device as claimed in claim 5,
wherein the window or windshield comprises an inner side facing the interior of the vehicle,
wherein the first volume hologram and the holographic filter (12) are formed on the inner side, wherein preferably the window or windshield comprises an outer side facing away from the inner side, and
the holographic filter (12) is designed for light that does not originate from the used light source and enters the window or the windshield via the outer side.

7. The holographic projection device as claimed in any of the preceding claims,
wherein the first volume hologram and the holographic filter (12) are arranged one above the other.

8. The holographic projection device as claimed in any of the preceding claims,
wherein the first volume hologram causes for at least one first wavelength range the deflection for generating the image and the light that does not originate from the used light source and is or would be incident on the first volume hologram at the predetermined solid angle originates from a second wavelength range, which differs from the at least one first wavelength range.

9. The holographic projection device as claimed in any of the preceding claims,
wherein the holographic filter (12) comprises a second volume hologram,
and/or
wherein the holographic filter (12) reflects the light that does not originate from the used light source and would be incident on the first volume hologram at the predetermined solid angle.

10. The holographic projection device as claimed in any of the preceding claims,
wherein the holographic filter (12) deflects of the light that does not originate from the used light source and is or would be incident on the first volume hologram at the predetermined solid angle the polarization component which is the greater.

11. The holographic projection device as claimed in claims 1 and 10,
wherein the greater polarization component is determined by coupling the light that does not originate from the used light source and is or would be incident on the first volume hologram at the predetermined solid angle into the transparent body (4).

12. The holographic projection device as claimed in any of the preceding claims,
wherein the deflection by means of the first volume hologram is effected in a first plane, and the deflection by means of the holographic filter (12) is effected in a second plane, which is neither parallel to nor coincides with the first plane,
wherein preferably the second plane is perpendicular to the first plane.

13. The holographic projection device as claimed in any of the preceding claims, comprising A used light source (2).

14. The holographic projection device as claimed in claim 13,
wherein the used light source is formed as an image module (2), which generates an image which is deflected by means of the volume hologram for generating the image,
wherein preferably the image module (2) comprises an image generator (8) for generating the image to be projected and an imaging optical unit (21) arranged downstream of the image generator (8).

15. The holographic projection device as claimed in any of claims 1 to 13,
wherein the image to be generated is exposed into the first volume hologram and the used light source is designed such that its light causes the reconstruction of the image to be generated.

## Revendications

1. Dispositif de projection holographique destiné à générer une image qu'un observateur peut percevoir lorsque son œil (A) est positionné dans une zone d'observation prédéfinie et qu'il regarde le dispositif de projection (1) selon un angle d'observation prédéfini, le dispositif de projection (1) comportant un premier hologramme de volume qui, exposé à la lumière d'une source de lumière utile, dévie celle-ci pour générer l'image,
le premier hologramme de volume présentant en outre la propriété que la lumière, qui ne provient pas de la source de lumière utile et qui est incidente sur le premier hologramme de volume selon un angle solide prédéfini, serait déviée de manière à pouvoir être perçue comme lumière parasite indésirable,
**caractérisé en ce que**
le dispositif de projection (1) comporte un filtre holographique (12) qui est disposé sur ou dans un corps transparent (4),
le premier hologramme de volume étant disposé sur ou dans le corps transparent (4), et
le filtre holographique (12)
- déviant la lumière, qui ne provient pas de la source de lumière utile et qui serait incidente sur le premier hologramme de volume selon l'angle solide prédéfini, avant d'être incidente sur le premier hologramme de volume de telle sorte qu'elle ne puisse pas être perçue comme lumière parasite indésirable,
et/ou
- déviant la lumière, qui ne provient pas de la source de lumière utile et qui est incidente sur le premier hologramme de volume selon l'angle solide prédéfini, après la déviation par le premier hologramme de volume de telle sorte qu'elle ne puisse pas être perçue comme lumière parasite indésirable.

2. Dispositif de projection holographique selon la revendication 1,
le filtre holographique (12) déviant la lumière, qui ne provient pas de la source de lumière utile et qui est incidente ou pourrait être incidente sur le premier hologramme de volume selon l'angle solide prédéfini, de telle sorte qu'elle est guidée par au moins une réflexion dans le corps transparent (4) en tant que lumière déviée.

3. Dispositif de projection holographique selon la revendication 2,
la lumière déviée étant guidée dans le corps transparent (4) par l'au moins une réflexion jusqu'à un piège à faisceau (13).

4. Dispositif de projection holographique selon l'une des revendications précédentes,
le corps (4) comportant un point de couplage (22) par lequel la lumière peut être amenée à la source de lumière utile et après lequel un guidage a lieu dans le corps (4) jusqu'au premier hologramme de volume, qui est espacé du point de couplage.

5. Dispositif de projection holographique selon l'une des revendications précédentes,
le corps transparent (4) étant formé comme une vitre d'un véhicule et en particulier comme un pare-brise d'un véhicule.

6. Dispositif de projection holographique selon la revendication 5,
la vitre ou le pare-brise comportant une face intérieure tournée vers l'intérieur du véhicule,
le premier hologramme de volume et le filtre holographique (12) étant formés sur la face intérieure, la vitre ou le pare-brise comportant de manière préférée une face extérieure opposée à la face intérieure et le filtre holographique (12) étant conçu pour de la lumière ne provenant pas de la source de lumière utile, qui pénètre dans la vitre ou le pare-brise par la face extérieure.

7. Dispositif de projection holographique selon l'une des revendications précédentes,
le premier hologramme de volume et le filtre holographique (12) étant disposés l'un au-dessus de l'autre.

8. Dispositif de projection holographique selon l'une des revendications précédentes,
le premier hologramme de volume provoquant la déviation pour générer l'image pour au moins une première plage de longueurs d'onde et la lumière ne provenant pas de la source de lumière utile et étant incidente ou potentiellement incidente sur le premier hologramme de volume selon l'angle solide prédéfini provenant d'une deuxième plage de longueurs d'onde qui diffère de l'au moins une première plage de longueurs d'onde.

9. Dispositif de projection holographique selon l'une des revendications précédentes,
le filtre holographique (12) comprenant un deuxième hologramme de volume et/ou
le filtre holographique (12) réfléchissant la lumière qui ne provient pas de la source de lumière utile et serait incidente sur le premier hologramme de volume selon l'angle solide prédéfini.

10. Dispositif de projection holographique selon l'une des revendications précédentes,
le filtre holographique (12) déviant la composante de polarisation la plus importante de la lumière qui ne provient pas de la source de lumière utile et qui est incidente ou serait incidente sur le premier hologramme de volume selon l'angle solide prédéfini.

11. Dispositif de projection holographique selon les revendications 1 et 10,
la composante de polarisation plus grande étant définie par le couplage d'entrée de la lumière qui ne provient pas de la source de lumière utile et qui est incidente ou serait incidente sur le premier hologramme de volume selon l'angle solide prédéfini dans le corps transparent (4).

12. Dispositif de projection holographique selon l'une des revendications précédentes,
la déviation étant effectuée au moyen du premier hologramme de volume dans un premier plan et la déviation étant effectuée au moyen du filtre holographique (12) dans un deuxième plan qui n'est ni parallèle au premier plan ni ne coïncide avec celui-ci,
le deuxième plan étant de manière préférée perpendiculaire au premier plan.

13. Dispositif de projection holographique selon l'une des revendications précédentes, avec une source de lumière utile (2).

14. Dispositif de projection holographique selon la revendication 13,
la source de lumière utile étant formée comme un module d'image (2) qui génère une image qui est déviée au moyen de l'hologramme de volume pour générer l'image,
le module d'image (2) comportant de manière préférée un générateur d'image (8) pour générer l'image à projeter et une optique d'imagerie (21) disposée en aval du générateur d'image (8).

15. Dispositif de projection holographique selon l'une des revendications 1 à 13,
l'image à générer étant exposée dans le premier hologramme de volume et la source de lumière utile étant formée de telle sorte que sa lumière provoque la reconstruction de l'image à générer.
